# EUROPEAN PATENT APPLICATION

(11) **EP 4 787 609 A1**
(43) Date of publication of application: **05.08.2026**
(21) Application number: 24871637.5
(22) Date of filing: 26.08.2024
(51) Int. Cl.: H01M 50/538, H01M 10/04, H01M 50/107, H01M 50/152, H01M 50/167, H01M 50/184, H01M 50/186, H01M 50/528, H01M 50/545

(54) **CYLINDRICAL BATTERY**

(30) Priority: 27.09.2023 JP 2023165937
(71) Applicant: PANASONIC INTELLECTUAL PROPERTY MANAGEMENT CO., LTD., Kadoma-shi, Osaka 571-0057 (JP)
(72) Inventor: OKIMOTO, Ryota, Kadoma-shi, Osaka 571-0057 (JP); HASEGAWA, Takasumi, Kadoma-shi, Osaka 571-0057 (JP); HIRAMATSU, Toshiya, Kadoma-shi, Osaka 571-0057 (JP)
(74) Representative: Eisenführ Speiser
(86) International application number: PCT/JP2024/030143
(87) International publication number: WO 2025/069835

(57) **Abstract**

A battery (10) comprises: an electrode body in which a positive electrode and a negative electrode are wound with a separator therebetween; a bottomed cylindrical outer can that accommodates the electrode body; a sealing body that is fixed to an opening of the outer can by caulking through a gasket; a plurality of electrode leads (20) that are joined to the positive electrode at intervals in a longitudinal direction of the positive electrode; and an upper current collector plate (50) included in the sealing body and to which the leading end side of the positive electrode leads (20) is welded by a plurality of dot-shaped welds (70) positioned at intervals in a circumferential direction. According to the battery (10), the plurality of electrode leads (20) can be welded to the upper current collector plate (50) more reliably, and are less likely to be damaged.

## Description

### TECHNICAL FIELD

The present disclosure relates to a cylindrical battery.

### BACKGROUND ART

Among conventional cylindrical batteries, there is a cylindrical battery disclosed in PATENT LITERATURE 1. This cylindrical battery comprises an electrode assembly, a bottomed cylindrical housing can that houses the electrode assembly, a sealing assembly with which an opening portion of the housing can is capped, and a gasket interposed between the housing can and the sealing assembly. The electrode assembly has a wound structure of a positive electrode and a negative electrode that are wound with a separator interposed between the positive electrode and the negative electrode. The positive electrode and the sealing assembly are electrically connected via a positive electrode lead, and the negative electrode and a bottom of the housing can are electrically connected via a negative electrode lead.

### CITATION LIST

### PATENT LITERATURE

PATENT LITERATURE 1: Japanese Unexamined Patent Application Publication No. H09-274923

### SUMMARY

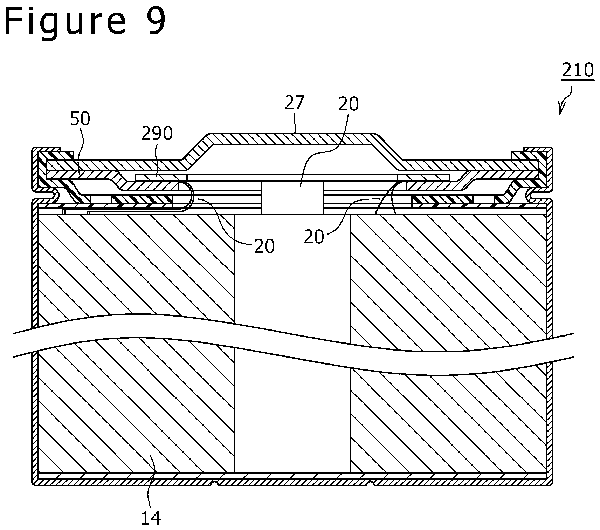

FIG. 9 is an axial sectional view of a cylindrical battery of a reference example. Note that a cylindrical battery 210 of the reference example is not publicly known and cannot serve as prior art of the cylindrical battery of the present disclosure, and thus cannot be a technique denying the patentability of the cylindrical battery of the present disclosure. As illustrated in FIG. 9, the cylindrical battery 210 of the reference example has a plurality of positive electrode leads 20 joined to a positive electrode of an electrode assembly 14 at an interval in a positive electrode longitudinal direction.

A leading end portion of each positive electrode lead 20 is bent along an upper side of an upper current collecting plate 50 having an annular shape in plan view, and is sandwiched between the upper current collecting plate 50 and an annular metal ring 290. In a state in which the leading end portion of each positive electrode lead 20 is sandwiched between the upper current collecting plate 50 and the annular metal ring 290, laser light is emitted toward the metal ring 290 while being continuously scanned in a circular shape in a circumferential direction from above, so that the upper current collecting plate 50, the positive electrode leads 20, and the metal ring 290 are welded together. The positive electrode is electrically connected to a terminal cap 27 joined to the upper current collecting plate 50.

In the cylindrical battery 210 of the reference example, each of a plurality of positive electrode leads 20 joined to the positive electrode at an interval in the positive electrode longitudinal direction is electrically connected to the terminal cap 27, so that a current collecting path is shortened and an electrical resistance is reduced. However, the present inventors have found that, when laser welding is performed by continuously scanning laser light in a circular shape in a circumferential direction from above, the positive electrode leads 20 may be damaged. It is an advantage of the present disclosure to provide a cylindrical battery that facilitates secure welding of a plurality of electrode leads to a current collecting plate and is less prone to damage in the electrode leads.

In order to solve the above-described problem, a cylindrical battery according to the present disclosure comprises an electrode assembly of a first electrode and a second electrode that are wound with a separator interposed between the first electrode and the second electrode, a bottomed cylindrical housing can that houses the electrode assembly, a sealing assembly that is crimp-fixed to an opening portion of the housing can via a gasket, a plurality of electrode leads joined to the first electrode at an interval in a first electrode longitudinal direction, and a current collecting plate which is included in the sealing assembly and to which leading end sides of the electrode leads are welded by a plurality of dot-shaped welding portions located at an interval in a circumferential direction.

A cylindrical battery of another embodiment according to the present disclosure comprises an electrode assembly of a first electrode and a second electrode that are wound with a separator interposed between the first electrode and the second electrode, a bottomed cylindrical housing can that houses the electrode assembly, a sealing assembly that is crimp-fixed to an opening portion of the housing can via a gasket, a plurality of electrode leads joined to the first electrode at an interval in a first electrode longitudinal direction, and a current collecting plate which is included in the sealing assembly and to which leading end sides of the electrode leads are welded by a welding portion extending in a circumferential direction, in which in plan view as viewed in an axial direction, each of an edge on a radially inward side of the welding portion and an edge on a radially outward side of the welding portion has a wave shape in which a convex shape and a concave shape are alternately repeated.

According to the cylindrical battery according to the present disclosure, secure welding of a plurality of electrode leads to the current collecting plate is facilitated and electrode leads are less prone to damage.

### BRIEF DESCRIPTION OF DRAWING

FIG. 1 is an axial sectional view of a cylindrical battery according to one embodiment of the present disclosure.
FIG. 2 is a perspective view illustrating an electrode assembly and parts of positive electrode leads.
FIG. 3 is a plan view of an upper current collecting plate to which the positive electrode leads are welded, as viewed from an axially upper side.
FIG. 4 is an axial sectional view illustrating a part of a cross section including a concentric circle in which a plurality of dot-shaped welding portions are formed and an axial direction, in a state of being developed in a strip.
FIG. 5 is a plan view corresponding to FIG. 3 in a cylindrical battery of a reference example.
FIG. 6 is a schematic diagram for explaining a problem of laser welding of two positive electrode leads constituting each set in the battery of the reference example.
FIG. 7(a) is a schematic plan view illustrating a part of an upper surface of an upper current collecting plate on which a plurality of dot-shaped welding portions located at an interval in a circumferential direction are provided, FIG. 7(b) is a schematic plan view corresponding to FIG. 7(a) in a battery of a modification, and FIG. 7(c) is a schematic plan view corresponding to FIG. 7(a) in the battery of the reference example.
FIG. 8 is a schematic plan view for explaining a shape of a welding portion of the modification as viewed in the axial direction.
FIG. 9 is an axial sectional view of the cylindrical battery of the reference example.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of one embodiment, but the cylindrical battery of the present disclosure is not limited to this.

In a case where a plurality of embodiments and modifications and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of a cylindrical battery 10 is defined as "upper", and a bottom 68 side of a housing can 16 in the axial direction is defined as "lower".

In addition, in the following description, a case will be described where a first electrode is a positive electrode, a second electrode is a negative electrode, a first electrode longitudinal direction is a positive electrode longitudinal direction, and an electrode lead is a positive electrode lead. However, the first electrode may be a negative electrode, the second electrode may be a positive electrode, the first electrode longitudinal direction may be a negative electrode longitudinal direction, and the electrode lead may be a negative electrode lead. Of the components described below, components that are not described in the independent claim indicating the highest level concept are arbitrary components, and are not essential components.

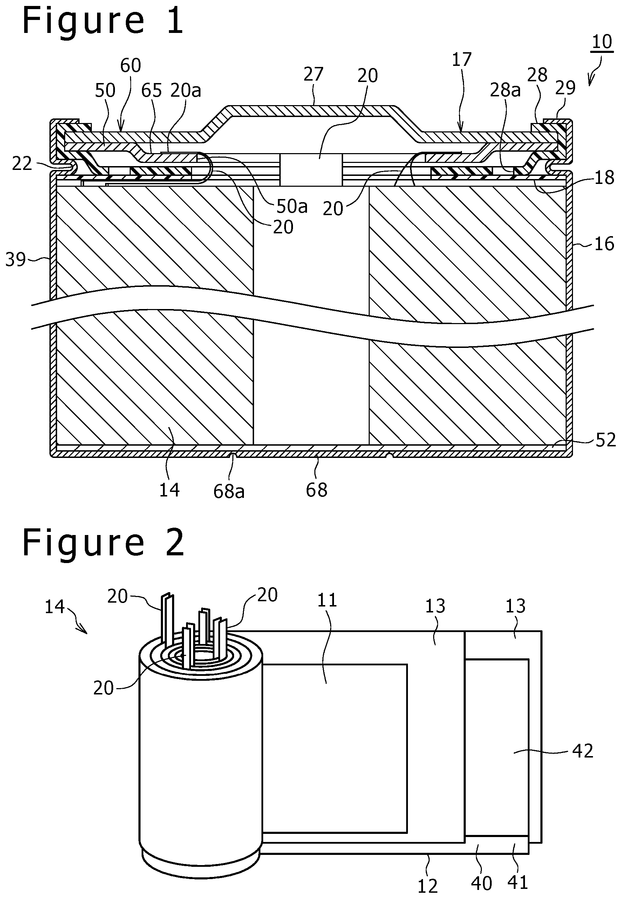

FIG. 1 is an axial sectional view of the cylindrical battery 10 according to one embodiment of the present disclosure. As illustrated in FIG. 1, the cylindrical battery (hereinafter, simply referred to as a battery) 10 comprises a wound-type electrode assembly 14, a non-aqueous electrolyte (not illustrated), a bottomed cylindrical metallic housing can 16 that houses the electrode assembly 14 and the non-aqueous electrolyte, and a sealing assembly 17 that is crimp-fixed to an opening portion of the housing can 16 via a gasket 28.

The non-aqueous electrolyte has ion conductivity (for example, lithium ion conductivity). The non-aqueous electrolyte may be a liquid electrolyte (electrolytic solution), or may be a solid electrolyte. The liquid electrolyte (electrolytic solution) includes a non-aqueous solvent, and an electrolyte salt dissolved in the non-aqueous solvent. For the non-aqueous solvent, for example, esters, ethers, nitriles, amides, mixed solvents containing two or more selected from the foregoing, and the like may be used. Examples of the non-aqueous solvent include ethylene carbonate (EC), ethyl methyl carbonate (EMC), dimethyl carbonate (DMC), diethyl carbonate (DEC), and mixed solvents containing the foregoing. The non-aqueous solvent may contain a halogen-substituted product (for example, fluoroethylene carbonate) obtained by substituting at least some of hydrogen atoms in these solvents with a halogen atom such as fluorine. For the electrolyte salt, a lithium salt such as LiPF₆ is used.

As the solid electrolyte, for example, a solid or gelled polymer electrolyte, or an inorganic solid electrolyte is used. The polymer electrolyte include, for example, a lithium salt and a matrix polymer, or a non-aqueous solvent, a lithium salt, and a matrix polymer. As the matrix polymer, for example, a polymer material which absorbs and gels the non-aqueous solvent is used. As the polymer material, for example, fluororesin, acrylic resin, polyether resin, or the like is used. As the inorganic solid electrolyte, for example, a material (for example, an oxide-based solid electrolyte, a sulfide-based solid electrolyte, or a halide-based solid electrolyte) known in an all-solid-state lithium ion secondary battery and the like is used.

FIG. 2 is a perspective view illustrating the electrode assembly 14 and parts of positive electrode leads 20. As illustrated in FIG. 2, the electrode assembly 14 has an elongated positive electrode 11, an elongated negative electrode 12, and two elongated separators 13, and has a wound structure of the positive electrode 11 and the negative electrode 12 that are wound with two elongated separators 13 each interposed between the positive electrode 11 and the negative electrode 12. A plurality of positive electrode leads 20 are joined and electrically connected to the positive electrode 11 at an interval in a longitudinal direction of the positive electrode 11. As illustrated in FIG. 2, in the present embodiment, the eight positive electrode leads 20 are joined with substantially equal intervals in the longitudinal direction, and four sets of two positive electrode leads 20 are included, each set having a radially overlapping portion in which the two positive electrode leads 20 overlap each other in a radial direction. The four sets of the positive electrode leads 20 are arranged at an interval in the circumferential direction.

The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are each formed to be one size larger than the positive electrode 11, and are disposed so as to interpose the positive electrode 11 therebetween. The separators 13 protrude upward from the positive electrode 11 and the negative electrode 12, and the negative electrode 12 protrudes downward from the positive electrode 11 and the separators 13.

The negative electrode 12 has a negative electrode core exposed portion 41 at a lower axial end portion extending from a winding start side end to a winding finish side end in the longitudinal direction of the elongated negative electrode 12, the negative electrode core exposed portion 41 being not provided with a negative electrode mixture layer 42 in a negative electrode core 40. Therefore, the lower axial end portion of the electrode assembly 14 is formed of the negative electrode core exposed portion 41. The negative electrode 12 may include a winding start end of the electrode assembly 14. However, in general, the separator 13 extends beyond the winding start side end of the negative electrode 12, and a winding start side end of the separator 13 serves as the winding start end of the electrode assembly 14.

The positive electrode 11 has a positive electrode core, and a positive electrode mixture layer formed on each surface of the positive electrode core. For the positive electrode core, a foil of metal such as aluminum or an aluminum alloy, which is stable within a potential range of the positive electrode 11, a film in which such a metal is disposed on a surface layer thereof, or the like can be used. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode core, drying the resulting coating film, and then compressing the coating film to form a positive electrode mixture layer on each surface of the positive electrode core.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of the group consisting of Ni, Co, Mn and Al.

Examples of the conductive agent included in the positive electrode mixture layer may include carbon materials such as carbon black, acetylene black, Ketjenblack, and graphite. Examples of the binder included in the positive electrode mixture layer may include fluororesins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The positive electrode 11 has positive electrode core exposed portions in an intermediate portion except for both end portions of the positive electrode 11 in the longitudinal direction, the positive electrode core exposed portions being arranged with substantially equal intervals in the longitudinal direction of the positive electrode 11 and being of the same number as the positive electrode leads 20. The positive electrode leads 20 are joined to the respective positive electrode core exposed portions. A plurality of positive electrode leads 20 are joined to the positive electrode core exposed portions at an interval in the longitudinal direction of the strip-shaped positive electrode core, and preferably, joined thereto with substantially equal intervals in the longitudinal direction, so that a current path in the longitudinal direction of the positive electrode 11 can be shortened and an internal resistance of the battery 10 can be reduced. The positive electrode leads 20 are each covered with, for example, an insulating tape (not illustrated), so that a short circuit between the positive electrode 11 and the negative electrode 12 is reduced. The insulating tape preferably cover each of the positive electrode core exposed portions.

The negative electrode 12 has the negative electrode core 40, and the negative electrode mixture layer 42 formed on each surface of the negative electrode core 40. For the negative electrode core 40, a foil of metal such as copper or a copper alloy, which is stable within a potential range of the negative electrode 12, a film in which such a metal is disposed on a surface layer thereof, or the like can be used. The negative electrode mixture layer 42 includes a negative electrode active material, and a binder. The negative electrode 12 can be produced by, for example, applying a negative electrode mixture slurry including a negative electrode active material, a binder, and the like on a negative electrode core 40, drying the resulting coating film, and then compressing the coating film to form a negative electrode mixture layer 42 on each surface of the negative electrode core 40.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. The negative electrode mixture layer 42 may include a silicon (Si) material containing Si as the negative electrode active material. For the negative electrode active material, a metal alloyed with lithium other than Si, an alloy containing such a metal, a compound containing such a metal, or the like may be used.

For the binder included in the negative electrode mixture layer 42, fluororesins, PAN, polyimide resins, acrylic resins, polyolefin resins, or the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used for the separator 13. Specific examples of the porous sheet include a microporous thin film, a woven fabric, and a nonwoven fabric. The material of the separator 13 is preferably a polyolefin resin such as polyethylene or polypropylene, a cellulose, or the like. The separator 13 may be either a single layer structure or a laminated structure. A heat-resistant layer or the like may be formed on a surface of the separator 13.

As illustrated in FIG. 1, the battery 10 comprises an annular insulating plate 18 on an upper side of the electrode assembly 14. The positive electrode lead 20 attached to the positive electrode 11 extends toward the sealing assembly 17 side through a through hole in the insulating plate 18. The sealing assembly 17 has an upper current collecting plate 50, and a terminal cap 27. The upper current collecting plate 50 is an annular metallic plate member, and has a through hole 50a at a radial center portion. The terminal cap 27 is a metallic plate member having no through hole, and is located on an upper side of the sealing assembly 17 in the axial direction. An end surface of the terminal cap 27 on the upper side in the axial direction is exposed to the outside except for an outer edge portion thereof, and the exposed portion constitutes a positive electrode terminal.

Each positive electrode lead 20 is bent along an upper surface of the upper current collecting plate 50 through the through hole 50a in the upper current collecting plate 50 from the positive electrode 11. An overlapping portion 20a located on a leading end side of the positive electrode lead 20 overlaps over the upper current collecting plate 50 in the axial direction. The overlapping portion 20a and the upper current collecting plate 50 are joined by means of laser welding. A welding method and a welding structure for the overlapping portion 20a and the upper current collecting plate 50 will be described in detail later.

The sealing assembly 17 has a laminating portion 60 in which the terminal cap 27 and the upper current collecting plate 50 are laminated on an outer circumferential side in the radial direction. When the laser light is emitted to the laminating portion 60 in the axial direction from above, the terminal cap 27 and the upper current collecting plate 50 are laser-welded and electrically connected. The annular upper surface of the upper current collecting plate 50 has an annular recessed portion inside the laminating portion 60 in the radial direction, the annular recessed portion opening upward in the axial direction and inward in the radial direction, and an annular space 65 opening only inward in the radial direction is provided between the upper current collecting plate 50 and the axial direction of the terminal cap 27. Each positive electrode lead 20 is joined to the upper current collecting plate 50 in the annular space 65.

The battery 10 comprises a metallic lower current collecting plate 52 on a lower side of the electrode assembly 14 in the axial direction. With reference to FIGS. 1 and 2, by emitting laser light from a lower surface side of the lower current collecting plate 52 in a state in which the electrode assembly 14 is pressed against an upper surface of the lower current collecting plate 52 so as to tilt the strip-shaped negative electrode core exposed portion 41 inward in the radial direction, the negative electrode core exposed portion 41 is laser-welded and joined to the upper surface of the lower current collecting plate 52 over a wide range. By emitting the laser light from a lower side of the housing can 16, the bottom 68 of the housing can 16 is laser-welded and joined to the lower current collecting plate 52. Thus, the negative electrode 12 of the electrode assembly 14 is electrically connected to the housing can 16 via the lower current collecting plate 52. By joining the negative electrode core exposed portion 41 to the upper surface of the lower current collecting plate 52 over the wide range, the current can be prevented from flowing for a long distance along the longitudinal direction of the elongated negative electrode 12, and an electrical resistance of the battery 10 can be reduced.

The housing can 16 has a cylindrical portion 39, and a bottom 68, and the cylindrical portion 39 includes an annular grooved portion 22, and an annular shoulder portion 29. The grooved portion 22 is formed by recessing a part of the cylindrical portion 39 inward in the radial direction over the entire circumference in the circumferential direction by a spinning process. The sealing assembly 17 is disposed above the grooved portion 22, and is crimp-fixed to the opening portion of the housing can 16 via the resin gasket 28. The shoulder portion 29 is formed when an upper end portion of the cylindrical portion 39 is bent inward in the radial direction and is crimped to a flange portion of the sealing assembly 17, and extends inward in the radial direction in the upper end portion of the cylindrical portion 39.

By sealing a gap between the housing can 16 and the sealing assembly 17 with the annular gasket 28, an internal space of the battery 10 is sealed. The gasket 28 is sandwiched between the housing can 16 and the sealing assembly 17, and insulates the sealing assembly 17 from the housing can 16. The gasket 28 has a role of a seal material for maintaining the airtightness of the inside of the battery, and a role as an insulating material for insulating the sealing assembly 17 from the housing can 16. The gasket 28 may have a through hole 28a. Providing the through hole 28a in the gasket 28 makes it easy to cause, when the non-aqueous electrolyte is a liquid electrolyte (electrolytic solution), the electrolytic solution to flow in the battery 10 and makes it possible to improve liquid circulation in the battery 10. The terminal cap 27 electrically connected to the positive electrode leads 20 serve s as the positive electrode terminal, and the housing can 16 electrically connected to the negative electrode core exposed portion 41 via the lower current collecting plate 52 serves as a negative electrode terminal.

The battery 10 has a thin easy rupture portion 68a in the bottom 68 of the housing can 16. The easy rupture portion 68a is formed by, for example, stamping a circular or C-shaped mark on a lower surface of the bottom 68. When the easy rupture portion 68a is provided in the bottom 68, the easy rupture portion 68a ruptures if abnormal heat generation has occurred in the battery 10, so that high-temperature gas in the battery 10 can be discharged to the outside, and the safety of the battery 10 can be increased. Note that the thin easy rupture portion may be provided in the terminal cap 27.

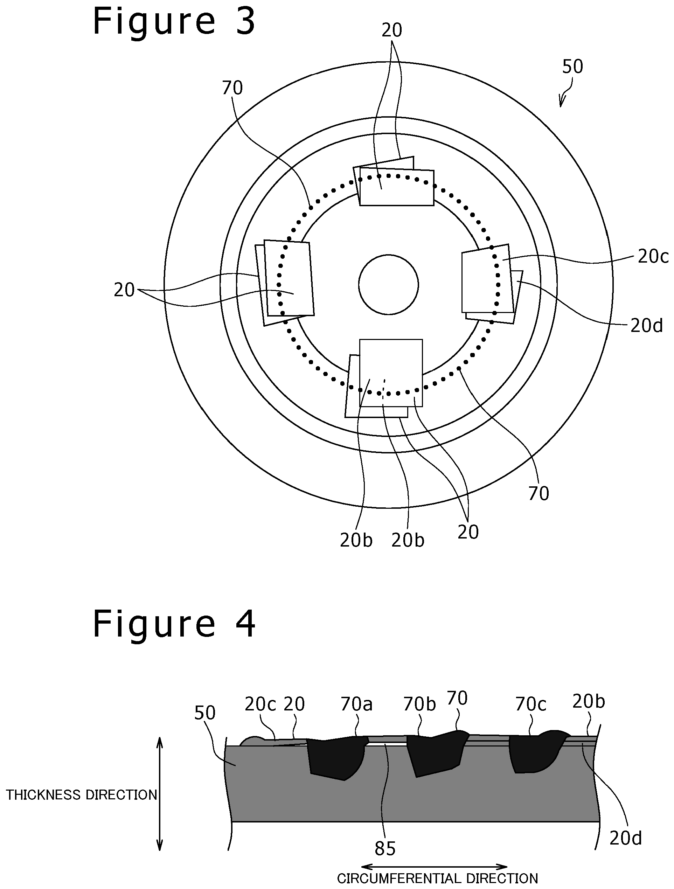

FIG. 3 is a plan view of the upper current collecting plate 50 to which the positive electrode leads 20 are welded, as viewed from an axially upper side. As illustrated in FIG. 3, the leading end sides of the positive electrode leads 20 are welded to the upper current collecting plate 50 by a plurality of dot-shaped welding portions 70 located at an interval in the circumferential direction. More specifically, each of the two positive electrode leads 20 constituting the above-described each set has a lead overlapping portion 20b in which the two positive electrode leads overlap each other in the axial direction. For example, using a pulse laser, laser light is emitted from above in a perforated form at an interval in the circumferential direction on a concentric circle including a portion along the upper surface of the upper current collecting plate 50 of the two lead overlapping portions 20b that overlap each other in the axial direction. Thus, the two lead overlapping portions 20b that overlap each other in the axial direction are welded by a plurality of dot-shaped welding portions 70 located at an interval in the circumferential direction, and the welded two lead overlapping portions 20b and the upper current collecting plate 50 are also welded by the plurality of dot-shaped welding portions 70.

FIG. 4 is an axial sectional view illustrating a part of a cross section including a concentric circle in which the plurality of dot-shaped welding portions 70 are formed and the axial direction, in a state of being developed in a strip. The left-right direction in FIG. 4 corresponds to the circumferential direction of the upper current collecting plate 50, and the up-down direction in FIG. 4 corresponds to the thickness direction of the upper current collecting plate 50. The positive electrode lead 20 located on the upper side of the two positive electrode leads 20 constituting the above-described each set may have a portion that does not overlap the lower positive electrode lead 20 in the axial direction due to a phase shift in the circumferential direction of the joining position of the two positive electrode leads 20 with respect to the positive electrode 11.

A dot-shaped welding portion 70a located on the left side on the paper surface of FIG. 4 is a welding portion 70 by which a portion of an upper positive electrode lead 20c located on upper side that does not overlap, in the axial direction, with a lower positive electrode lead 20d located on the lower side, is welded to the upper current collecting plate 50. In addition, a dot-shaped welding portion 70b located at the center and a dot-shaped welding portion 70c located on the right side on the paper surface of FIG. 4 are welding portions 70 provided at the positions where the upper positive electrode lead 20c and the lower positive electrode lead 20d overlap each other in the axial direction. As illustrated in FIG. 4, a gap 85 is formed between the portion of the upper positive electrode lead 20c that does not overlap the lower positive electrode lead 20d and the upper current collecting plate 50.

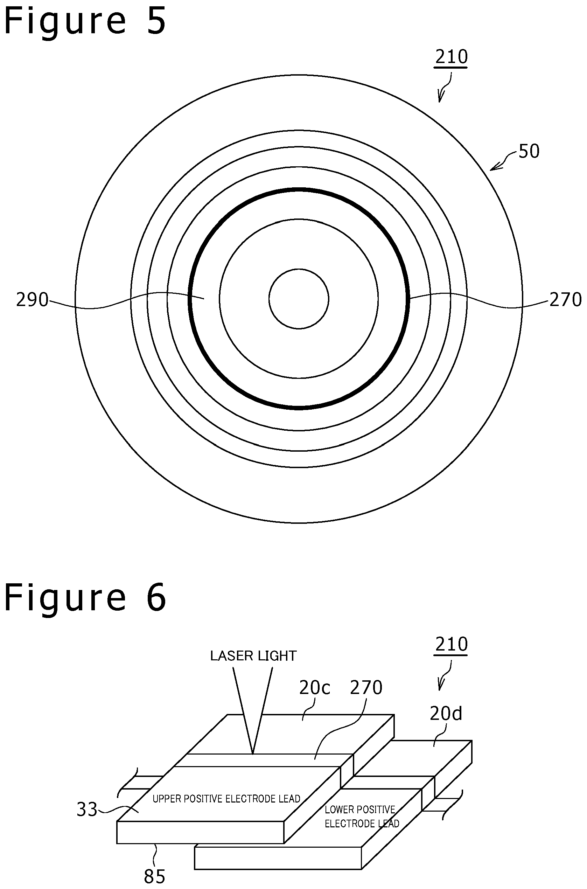

Next, advantageous effects of the cylindrical battery 10 according to the present disclosure will be described. FIG. 5 is a plan view corresponding to FIG. 3 in a cylindrical battery 210 of a reference example. As illustrated in FIG. 5, in the battery 210 of the reference example, a leading end portion of each positive electrode lead 20 is bent along an upper side of an upper current collecting plate 50 having an annular shape in plan view, and is sandwiched between the upper current collecting plate 50 and an annular metal ring 290. In a state in which the leading end portion of each positive electrode lead 20 is sandwiched between the upper current collecting plate 50 and the annular metal ring 290, laser light is emitted to the metal ring 290 while being continuously scanned in a circular shape in a circumferential direction from above, so that the upper current collecting plate 50, the positive electrode leads 20, and the metal ring 290 are welded together. In the battery 210 of the reference example, in plan view as viewed from above in the axial direction, a circular welding portion 270 is formed having a substantially uniform width along the entire circumference in the circumferential direction.

FIG. 6 is a schematic diagram for explaining a problem of laser welding of two positive electrode leads 20 constituting each set in the battery 210 of the reference example. As illustrated in FIG. 6, in the battery 210 of the reference example, the laser light is continuously emitted over the entire circumference in the circumferential direction. Accordingly, the laser light is also emitted to a portion of an upper positive electrode lead 20c that does not overlap a lower positive electrode lead 20d in the axial direction, that is, a low-rigidity portion 33 in which a gap 85 is formed on the lower side of the upper positive electrode lead 20c over the entire region in the circumferential direction. Therefore, a hole may be generated in the low-rigidity portion 33, or cracks may be continuously formed in the low-rigidity portion 33, resulting in a break of the low-rigidity portion 33, and thus the quality is less likely to be stable.

In contrast, according to the battery 10, the leading end side of the positive electrode leads 20 are welded to the upper current collecting plate 50 by a plurality of dot-shaped welding portions 70 located at an interval in the circumferential direction. Accordingly, unlike the case illustrated in FIG. 5, the welding portions 70 are not formed over the entire region in the circumferential direction of the low-rigidity portion 33, and an excessive force is not applied to the low-rigidity portion 33. Even if cracks are formed in the low-rigidity portion 33 due to emission of the laser light, the cracks are not continuously formed, and positions where the cracks are formed are limited to local positions in the low-rigidity portion 33.

As a result, even if the output of laser light is increased until the positive electrode leads 20 can be securely welded to the upper current collecting plate 50, the occurrence of damage to the positive electrode leads 20 can be reduced. Therefore, secure welding of a plurality of positive electrode leads 20 to the upper current collecting plate 50 is facilitated and the positive electrode leads 20 are less prone to damage.

Furthermore, according to the battery 10, as compared to the battery 210 of the reference example, the metal ring 290 is eliminated, and the number of components is smaller, which makes it possible to reduce a manufacturing cost and simplify a manufacturing process, so that the mass productivity of the battery 10 is improved.

Since the positive electrode leads 20 are easily welded to the upper current collecting plate 50 with a sufficient welding strength, a distance between the welding portions 70 that are adjacent to each other in the circumferential direction is preferably less than or equal to 3 mm. Since the positive electrode leads 20 are easily welded to the upper current collecting plate 50 with a sufficient welding strength, a width of the welding portion 70 is preferably greater than or equal to 0.01 mm. Since the positive electrode leads 20 are easily welded to the upper current collecting plate 50 with a sufficient welding strength, a ratio of the thickness of the welding portion 70 in the axial direction to the thickness of the upper current collecting plate 50 in the axial direction in the axial cross section including the welding portion 70 is preferably greater than or equal to 0.05.

The width of the welding portion 70 is preferably less than or equal to 5 mm so that the irradiated portion by the laser light is less prone to damage. To prevent the penetration of laser light through the upper current collecting plate 50, a ratio of the thickness of the welding portion 70 in the axial direction to the thickness of the upper current collecting plate 50 in the axial direction in the axial cross section including the welding portion 70 is preferably less than or equal to 0.95.

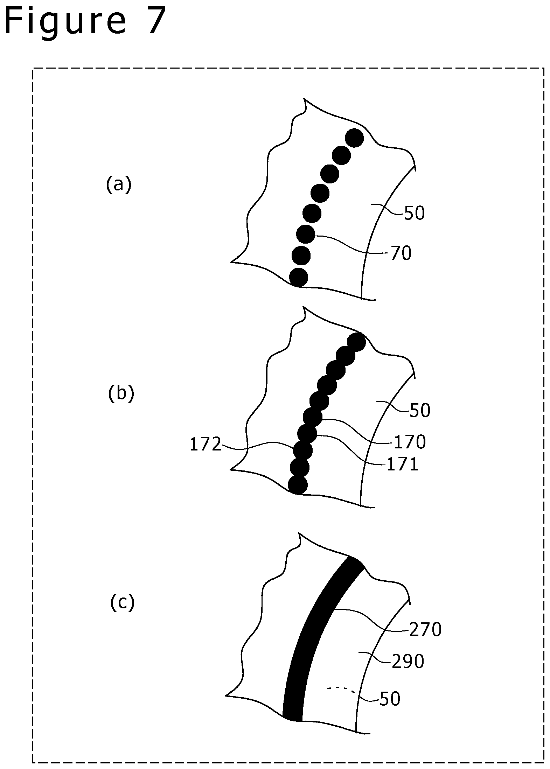

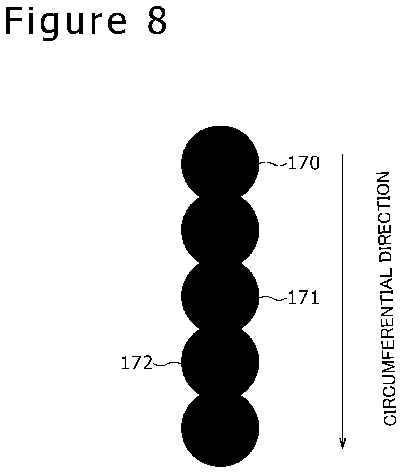

The present disclosure is not limited to the above embodiment and modifications thereof, and various improvements and changes are possible within the matters described in the claims of the present application and the scope of equivalence of claims. For example, in the above embodiment, as illustrated in FIG. 7(a), a case has been described where the leading end sides of the positive electrode leads 20 are welded to the upper current collecting plate 50 by a plurality of dot-shaped welding portions 70 located at an interval in the circumferential direction. However, as illustrated in FIGS. 7(B) and 8, the leading end sides of the positive electrode leads 20 may be welded to the upper surface of the upper current collecting plate 50 by a welding portion 170 extending in the circumferential direction by using a pulse laser, and in plan view as viewed in the axial direction, an edge 171 on a radially inward side of the welding portion 170 and an edge 172 on a radially outward side of the welding portion 170 may have a wave shape in which a convex shape and a concave shape are alternately repeated.

Even in the case of the modification, as compared to when the laser light is continuously emitted on the concentric circle, that is, when the positive electrode leads 20 are laser-welded to the upper current collecting plate 50 by the circular welding portion 270 having a substantially uniform width along the entire circumference in the circumferential direction (see FIG. 7(c)), an excessive force is less likely to be applied to the low-rigidity portion 33, secure welding of a plurality of positive electrode leads 20 to the upper current collecting plate 50 is facilitated, and the positive electrode leads 20 are less prone to damage.

A case has been described where the battery 10 comprises the eight positive electrode leads 20, and includes four sets of two positive electrode leads 20, each set having a lead overlapping portion 20b in which the two positive electrode leads 20 overlap each other in the axial direction. However, the battery may comprise a plurality of positive electrode leads, and one set, two sets, three sets or five sets may be present, each set consisting of two positive electrode leads and having a lead overlapping portion in which the two positive electrode leads overlap each other in the axial direction. Alternatively, the battery may comprise a plurality of positive electrode leads, and no set consisting of two positive electrode leads and having a lead overlapping portion in which the two positive electrode leads overlap each other in the axial direction may be present. Even in this case, cracks can be prevented from being continuously formed in the positive electrode leads.

In addition, a case has been described where the negative electrode core exposed portion 41 is electrically connected to the bottom 68 of the housing can 16 via the lower current collecting plate 52. However, the negative electrode core exposed portion may be electrically connected to the bottom of the housing can via one or more negative electrode leads. Alternatively, an outermost circumferential surface of the electrode assembly includes the negative electrode core exposed portion, and the negative electrode core exposed portion of the outermost circumferential surface is brought into contact with an inner circumferential surface of the housing can, so that the negative electrode may be electrically connected to the housing can. Alternatively, in addition the contact of the negative electrode core exposed portion of the outermost circumferential surface with the inner circumferential surface of the housing can, the negative core exposed portion provided at the winding start side end portion of the negative electrode may be electrically connected to the bottom of the housing can via the negative electrode lead.

A case has been described where the leading end sides of the positive electrode leads 20 are welded only to the upper current collecting plate 50, and only the leading end sides of the positive electrode leads 20 welded to the upper current collecting plate 50 are arranged in an annular space provided between the upper current collecting plate 50 and the axial direction of the terminal cap 27. However, the battery may comprise an annular metal ring, and the leading end sides of the positive electrode leads may be sandwiched between the upper current collecting plate and the metal ring. Then, the leading end sides of the positive electrode leads welded to the upper current collecting plate may be welded to the metal ring by means of laser welding by emitting the laser light to the metal ring from above in the method of the present disclosure. The leading end sides of the positive electrode leads 20 welded to the upper current collecting plate 50 and at least a part of the metal ring may be arranged in the annular space provided between the upper current collecting plate and the axial direction of the terminal cap.

The cylindrical battery of the present disclosure may have the following configurations.

Configuration 1: A cylindrical battery comprising: an electrode assembly of a first electrode and a second electrode that are wound with a separator interposed between the first electrode and the second electrode; a bottomed cylindrical housing can that houses the electrode assembly; a sealing assembly that is crimp-fixed to an opening portion of the housing can via a gasket; a plurality of electrode leads joined to the first electrode at an interval in a first electrode longitudinal direction; and a current collecting plate which is included in the sealing assembly and to which leading end sides of the electrode leads are welded by a plurality of dot-shaped welding portions located at an interval in a circumferential direction.

Configuration 2: A cylindrical battery comprising: an electrode assembly of a first electrode and a second electrode that are wound with a separator interposed between the first electrode and the second electrode; a bottomed cylindrical housing can that houses the electrode assembly; a sealing assembly that is crimp-fixed to an opening portion of the housing can via a gasket; a plurality of electrode leads joined to the first electrode at an interval in a first electrode longitudinal direction; and a current collecting plate which is included in the sealing assembly and to which leading end sides of the electrode leads are welded by a welding portion extending in a circumferential direction, wherein in plan view as viewed in an axial direction, each of an edge on a radially inward side of the welding portion and an edge on a radially outward side of the welding portion has a wave shape in which a convex shape and a concave shape are alternately repeated.

Configuration 3: The cylindrical battery described in Configuration 1 or 2, wherein the leading end sides of the electrode leads are welded only to the current collecting plate.

Configuration 4: The cylindrical battery described in any one of Configurations 1 to 3, wherein a radially outward side of the current collecting plate is joined to a terminal cap constituting an external terminal, an annular space opening only toward the radially inward side is provided between the current collecting plate and an axial direction of the terminal cap, and only the leading end sides of the electrode leads welded to the current collecting plate are arranged in the annular space.

Configuration 5: The cylindrical battery described in Configuration 1, wherein a distance between the welding portions that are adjacent to each other in the circumferential direction is less than or equal to 3 mm.

Configuration 6: The cylindrical battery described in any one of Configurations 1 to 5, wherein a width of the welding portions is greater than or equal to 0.01 mm and less than or equal to 3 mm.

Configuration 7: The cylindrical battery described in any one of Configurations 1 to 6, wherein a ratio of a thickness of the welding portion in the axial direction to a thickness of the current collecting plate in the axial direction in an axial cross section including the welding portion is greater than or equal to 0.05 and less than or equal to 0.95.

Configuration 8: The cylindrical battery described in any one of Configurations 1 to 7, wherein the cylindrical battery includes four sets of two electrode leads, each set having a lead overlapping portion in which the two electrode leads overlap each other in the axial direction, the four sets of the electrode leads are located at an interval in the circumferential direction, and the two lead overlapping portions that overlap each other in the axial direction are welded, and the welded two lead overlapping portions and the current collecting plate are also welded.

### REFERENCE SIGNS LIST

10 Battery, 11 Positive electrode, 12 Negative electrode, 13 Separator, 14 Electrode assembly, 16 Housing can, 17 Sealing assembly, 18 Insulating plate, 20 Positive electrode lead, 20a Overlapping portion, 20b Lead overlapping portion, 20c Upper positive electrode lead, 20d Lower positive electrode lead, 22 Grooved portion, 27 Terminal cap, 28 Gasket, 28a Through hole, 29 Shoulder portion, 33 Low-rigidity portion, 39 Cylindrical portion, 40 Negative electrode core, 41 Negative electrode core exposed portion, 42 Negative electrode mixture layer, 50 Upper current collecting plate, 50a Through hole, 52 Lower current collecting plate, 60 Laminating portion, 65 Annular space, 68 Bottom, 68a Easy rupture portion, 70, 70a, 70b, 70v, 170 Welding portion, 85 Gap, 171 Edge on radially inward side of welding portion, 172 Edge on radially outward side of welding portion

## Claims

1. A cylindrical battery comprising:
an electrode assembly of a first electrode and a second electrode that are wound with a separator interposed between the first electrode and the second electrode;
a bottomed cylindrical housing can that houses the electrode assembly;
a sealing assembly that is crimp-fixed to an opening portion of the housing can via a gasket;
a plurality of electrode leads joined to the first electrode at an interval in a first electrode longitudinal direction; and
a current collecting plate which is included in the sealing assembly and to which leading end sides of the electrode leads are welded by a plurality of dot-shaped welding portions located at an interval in a circumferential direction.

2. A cylindrical battery comprising:
an electrode assembly of a first electrode and a second electrode that are wound with a separator interposed between the first electrode and the second electrode;
a bottomed cylindrical housing can that houses the electrode assembly;
a sealing assembly that is crimp-fixed to an opening portion of the housing can via a gasket;
a plurality of electrode leads joined to the first electrode at an interval in a first electrode longitudinal direction; and
a current collecting plate which is included in the sealing assembly and to which leading end sides of the electrode leads are welded by a welding portion extending in a circumferential direction,
wherein in plan view as viewed in an axial direction, each of an edge on a radially inward side of the welding portion and an edge on a radially outward side of the welding portion has a wave shape in which a convex shape and a concave shape are alternately repeated.

3. The cylindrical battery according to claim 1 or 2, wherein
the leading end sides of the electrode leads are welded only to the current collecting plate.

4. The cylindrical battery according to claim 1 or 2, wherein
a radially outward side of the current collecting plate is joined to a terminal cap constituting an external terminal,
an annular space opening only toward the radially inward side is provided between the current collecting plate and an axial direction of the terminal cap, and
only the leading end sides of the electrode leads welded to the current collecting plate are arranged in the annular space.

5. The cylindrical battery according to claim 1, wherein
a distance between the welding portions that are adjacent to each other in the circumferential direction is less than or equal to 3 mm.

6. The cylindrical battery according to claim 1 or 2, wherein
a width of the welding portions is greater than or equal to 0.01 mm and less than or equal to 3 mm.

7. The cylindrical battery according to claim 1 or 2, wherein
a ratio of a thickness of the welding portion in the axial direction to a thickness of the current collecting plate in the axial direction in an axial cross section including the welding portion is greater than or equal to 0.05 and less than or equal to 0.95.

8. The cylindrical battery according to claim 1 or 2, wherein
the cylindrical battery includes four sets of two electrode leads, each set having a lead overlapping portion in which the two electrode leads overlap each other in the axial direction,
the four sets of the electrode leads are located at an interval in the circumferential direction, and
the two lead overlapping portions that overlap each other in the axial direction are welded, and the welded two lead overlapping portions and the current collecting plate are also welded.
